# FASCICULE DE BREVET EUROPEEN

(11) **EP 0 565 434 B1**
(45) Date de publication et mention de la délivrance du brevet: **08.09.1999**
(21) Numéro de dépôt: 93400892.1
(22) Date de dépôt: 06.04.1993
(51) Int. Cl.: B44B 5/00, G09F 7/16

(54) **Procédé et dispositif pour la fabrication de plaques minéralogiques notamment réfléchissantes**
Verfahren und Vorrichtung zur Herstellung von Kennzeichenschildern, insbesondere reflektierenden Schildern
Method and device for the manufacturing of license plates, in particular reflective plates

(30) Priorité: 08.04.1992 FR 9204286; 27.05.1992 FR 9206481; 22.07.1992 FR 9209039
(43) Date de publication de la demande: 13.10.1993
(73) Titulaire: Société Anonyme dite: FABRICAUTO, F-71008 Macon Cedex (FR)
(72) Inventeur: Henry, René, F-71250 Cluny (FR)
(74) Mandataire: Jolly, Jean-Pierre

(56) Documents cités:
- EP-A- 0 226 735
- EP-A- 0 259 925
- DE-A- 2 062 408
- FR-A- 2 210 460
- FR-A- 2 341 907
- FR-A- 2 527 108
- FR-A- 2 625 136
- SOVIET PATENTS ABSTRACTS Section PQ, Week 9022, 11 Juillet 1990 Derwent Publications Ltd., London, GB; Class P, Page 52, AN 90-170151/22 & SU-A-1 523 221 (V.I. LOPANSKII) 23 Novembre 1989
- PATENT ABSTRACTS OF JAPAN vol. 14, no. 140 (M-950)16 Mars 1990 & JP-A-2 008 023 ( PENTEL KK ) 11 Janvier 1990
- PATENT ABSTRACTS OF JAPAN vol. 15, no. 168 (M-1107)26 Avril 1991 & JP-A-3 034 811 ( PENTEL K.K. ) 14 Février 1991

## Description

L'invention concerne un procédé et un dispositif du type décrit dans la partie préambule de la revendication 1, pour la fabrication de plaques minéralogiques pour l'immatriculation des véhicules automobiles notamment. Elle concerne en particulier les plaques minéralogiques de type dites à doubles plaques réflectorisées ou non.

Les plaques d'immatriculation, dites à doubles plaques, à fond noir et caractères blancs ou aluminium sont bien connues. Ces plaques sont obtenues par assemblage en une opération de semi-découpe d'une plaque épaisse support en aluminium et d'une plaque fine de surface également en aluminium et portant la couleur du fond. La formation des caractères est effectuée ultérieurement à façon par les garagistes. L'opération de semi-découpe est effectuée à l'aide d'une presse à découper, les deux plaques-supports et de surface, prédécoupées aux dimensions de la plaque à réaliser, étant positionnées manuellement sur l'outil de presse et assemblées successivement à une cadence de 300 à 400 pièces par heure.

Pour la fabrication de plaques réflectorisées, on peut utiliser ce procédé de fabrication, la plaque fine noire de surface étant remplacée par une plaque revêtue d'un film réfléchissant. Cependant, un tel procédé comporte de nombreux inconvénients.

Tout d'abord, l'opération de semi-découpe nécessite d'utiliser une plaque support relativement épaisse, d'environ 1,2 mm d'épaisseur dans la mesure où le repoussement de matière ne doit pas dépasser la moitié de l'épaisseur de la plaque épaisse, soit 0,6 mm qui représente une profondeur à peine suffisante pour l'encastrement de la plaque fine de surface. En outre, l'encastrement du bord périphérique de la plaque fine au sein de la plaque-support est mal assuré par le fait que cette plaque fine s'interpose entre la matrice et le poinçon de la presse, de sorte que son bord interne s'affine et s'arrondit avec préjudice sur la liaison d'encastrement des plaques.

Ensuite, l'opération de semi-découpe par l'effet de presse et d'étirement sur la plaque fine produit un allongement de celle-ci, qui se traduit par une déformation de la planéité de surface et donc un bombage de celle-ci sur la plaque-support, et par la formation de vagues entre les caractères formés ultérieurement.

En outre, l'utilisation obligée d'une plaque fine à la même dimension que la plaque-support pour l'opération de semi-découpe conduit à une perte de matière non négligeable, de l'ordre d'environ 12%. Cet inconvénient est accentué par le fait que le produit réfléchissant est relativement coûteux.

Par ailleurs, le produit réfléchissant du film revêtant la plaque fine de surface étant essentiellement constitué de billes microscopiques de verre, l'outillage de presse est sujet à une usure rapide. Le coût du réaffûtage des outils de semi-découpe est relativement important.

Enfin, la cadence de fabrication est limitée par le positionnement manuel des plaques avant semi-découpe.

On connaît également par FR-2 341 907 un procédé de fabrication d'une plaque d'immatriculation pour véhicule automobile par lequel les bords d'une plaque arrière support sont rabattus sur le devant d'une plaque avant de surface pour former une plaque double prête à être numérotée. Néanmoins, le rabattement est difficile à réaliser.

L'invention vise à remédier à ces inconvénients en proposant un nouveau procédé de fabrication de plaques d'immatriculation de type à doubles plaques et notamment réflectorisées.

Le procédé de fabrication de plaques d'immatriculation selon l'invention est en effet caractérisé en ce qu'il fait intervenir les étapes suivantes :
- la fabrication d'une plaque-support brute, découpée et formée aux dimensions de la plaque à réaliser, avec un logement en creux approprié pour recevoir une seconde plaque fine de surface sur laquelle seront formés de façon classique les caractères-de la plaque à réaliser;
- la fabrication de la seconde plaque fine de surface découpée à des dimensions légèrement inférieures à celles dudit logement formé sur la plaque-support ;
- la mise en place de la seconde plaque fine dans le logement de la plaque support ; et
- l'assemblage de ladite seconde plaque fine de surface et de la plaque-support, à l'aide d'au moins deux parties latérales parallèles de ladite plaque-support faisant saillie vers l'intérieur du logement au-dessus de la plaque fine, de manière à constituer une plaque prête à être numérotée avant pose sur le véhicule.

Selon une caractéristique importante de l'invention, le logement de la plaque support est issu d'emboutissage direct de la plaque, le bord périphérique étant tourné vers l'intérieur sur toute sa longueur. La plaque fine de surface est engagée élastiquement dans ce logement, par exemple par cintrage de sa surface, reprenant ensuite sa planéité en engagement sous les bords rentrés de la plaque support. La plaque fine de surface est conformée à une dimension légèrement inférieure à son logement afin qu'elle puisse posséder un jeu lui permettant une légère déformation, notamment lors de la numérotation ultérieure. Cet espace de jeu élimine en particulier toute possibilité de bombage inesthétique de cette plaque de surface.

Ledit bord du logement est avantageusement formé avec une section régulière en queue d'aronde de manière à permettre un encastrement parfait de la plaque de surface dans le logement de la plaque-support, laquelle peut être entrée à l'assemblage avec un léger cintrage dans celui-ci.

Par ailleurs, ce bord contribue à améliorer l'esthétique de la plaque par un effet d'encadrement de la plaque de surface.

L'ensemble des opérations précitées peut être réalisé selon un procédé en continu incluant deux lignes de fabrication, à savoir une première ligne de fabrication des plaques-supports, comportant un poste d'alimentation en rouleaux d'une bande d'aluminium à l'épaisseur et largeur des plaques à réaliser, cette bande étant emboutie avec son logement, puis découpée en plaques-supports brutes à la dimension des plaques à réaliser, lesquelles sont ensuite emmagasinées par empilage dans un poste de magasinage des plaques-supports en bout de ligne, et une seconde ligne de fabrication des plaques fines de surface, comportant un poste d'alimentation en rouleaux d'une bande d'aluminium revêtue ou non d'une couche réflèchissante en surface, cette bande de largeur légèrement inférieure à celle du logement formé sur la plaque-support étant découpée en plaques fines de surface, à une longueur légèrement inférieure à celle dudit logement de la plaque-support, lesquelles sont emmagasinées ensuite par empilage en bout de cette seconde ligne, ces deux lignes étant rassemblées en une seule par un poste d'assemblage de la plaque fine sur la plaque-support, ce poste étant essentiellement constitué d'un outil de manutention automatique prélevant successivement une plaque fine d'une pile en bout de seconde ligne et la déposant précisément en regard du logement de la plaque-support convoyée sur la ligne de jonction et l'appliquant dans son logement, les plaques ainsi assemblées étant empilées en bout de ligne.

Selon cette disposition, on n'utilise plus d'outil de semi-découpe à conformation périphérique comme dans le procédé classique de confection des doubles plaques actuelles, mais des outils classiques d'emboutissage et de grugeage pour effectuer le formage et la découpe à longueur des plaques-supports et des outils à lame simple pour découper les plaques fines à partir de leur bande d'alimentation. Ce type d'outil est beaucoup moins onéreux que les outils de semi-découpe précités.

Par ailleurs, dans un tel procédé, la cadence de production n'est plus limitée par le positionnement manuel des plaques avant l'assemblage du procédé classique actuel et peut être notablement augmentée en conformité avec les outils de manutention automatiques actuels permettant l'assemblage en continu des plaques fines et des plaques-supports sur une ligne de convoyage.

L'invention concerne également un dispositif pour la mise en oeuvre du procédé défini ci-dessus et les plaques obtenues.

Selon un second aspect de l'invention, le procédé consiste en ce que :
- dans le traitement desdites plaques-supports, en vue de former le logement pour la seconde plaque fine de surface, ce logement est conformé avec un bord régulier suffisant pour permettre sa déformation ; et en ce que
- l'assemblage de la plaque fine et de la plaque-support est obtenu par une opération de sertissage du bord du logement de la plaque-support, la plaque fine de surface étant découpée à des dimensions très légèrement inférieures à celles dudit logement formé sur la plaque-support, l'opération de sertissage susdite étant effectuée au moyen d'un outil de presse constitué d'une matrice inférieure, d'un poinçon et d'un serre-flanc mobiles supérieurs, le serre-flan venant sur la plaque fine de surface, le poinçon sur la surface haute délimitée par le bord du logement de la plaque support, et la matrice recevant la plaque-support par sa surface inférieure de sorte que lors de l'opération de sertissage, le bord du logement de la plaque-support est déformé sous la pression des outils et il rentre vers l'intérieur du logement, la déformation étant limitée par l'amplitude de la pression de presse et par la forme de la matrice et du serre-flan correspondant, de manière à emprisonner avec faible jeu périphérique latéral la plaque fine dans son logement.

Les dimensions relatives de la plaque fine et de son logement, de même que le sertissage de cette dernière dans son logement sont déterminés pour conférer à l'assemblage résultant un faible jeu permettant l'extension de la plaque fine sans déformation lors du numérotage ultérieur.

Dans cette même idée de sertissage du bord du logement de la périphérie de surface, on peut encore utiliser une plaque support plane, poser la plaque fine de surface centrée sur la plaque-support, et former et sertir simultanément un bord de la plaque-support emprisonnant la plaque fine de surface (par des outils combinés).

Le procédé peut fonctionner en continu, les plaques-supports et plaques fines de surface étant issues de deux lignes de fabrication parallèles distinctes qui se rejoignent à la pose de la plaque fine sur la plaque-support.

Selon un troisième aspect de l'invention, le procédé consiste à former le logement pour la seconde plaque fine de surface par la semi-découpe des plaques-supports suivie d'une expansion latérale interne périphérique du poinçon sur la matrice de l'outil en fin de semi-découpe, le bord interne périphérique du logement formé étant rentré vers l'intérieur.

Ledit bord du logement est avantageusement formé avec une section régulière en queue d'aronde de manière à permettre un encastrement parfait de la plaque de surface dans le logement de la plaque-support, laquelle peut être entrée à l'assemblage avec un léger cintrage dans celui-ci.

L'ensemble des opérations précitées peut être réalisé selon un procédé en continu incluant deux lignes de fabrication, à savoir une première ligne de fabrication des plaques-supports, et une seconde ligne de fabrication des plaques fines de surface, les deux lignes précédentes étant rassemblées en une seule par un poste d'assemblage des plaques. L'invention concerne également le dispositif pour la mise en oeuvre du procédé ainsi que les plaques obtenues.

On décrira ci-après des exemples de réalisation de l'invention en référence aux dessins annexés sur lesquels:
- la figure 1 est une vue schématique d'une chaîne de fabrication de plaques d'immatriculation selon le procédé de l'invention dans son premier aspect,
- la figure 2 est une coupe agrandie partielle de la plaque obtenue,
- la figure 3 est une vue schématique de l'outil utilisé pour le formage de la plaque-support,
- la figure 4 est une vue plus complète du poste d'assemblage,
- la figure 5 est une vue schématique en demi-coupe transversale partielle d'une plaque support emboutie sur laquelle on aposé une plaque fine de surface selon le procédé de l'invention dans son second aspect, et
- la figure 6 est une vue analogue à la précédente de la plaque terminée correspondante prête à être numérotée,
- la figure 7 est une vue schématique d'une chaîne de fabrication de plaques d'immatriculation selon le procédé de l'invention dans son troisième aspect,
- la figure 8 est une coupe agrandie partielle de la plaque obtenue,
- la figure 9 est une vue schématique de l'outil utilisé pour la semi-découpe de la plaque-support, et
- la figure 10 est une vue plus complète du poste d'assemblage correspondant.

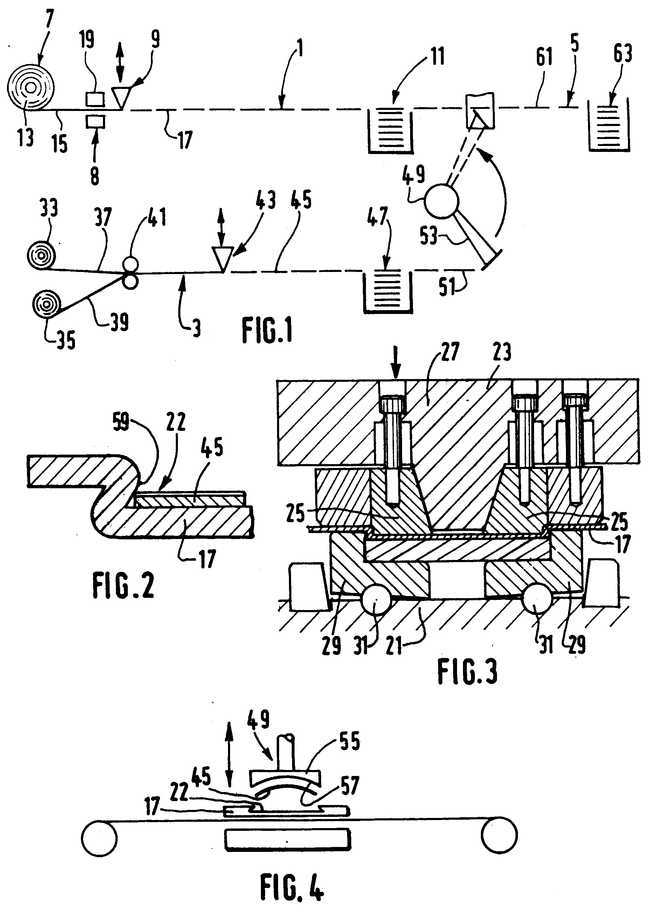

Un exemple de procédé de réalisation selon l'invention est représenté à la figure 1, dans une chaîne de fabrication complète de plaques d'immatriculation fonctionnant en continu. Cette chaîne comporte deux lignes, respectivement 1 et 3, pour la fabrication de la plaque-support et de la plaque fine de surface des plaques d'immatriculation réalisées, ces deux lignes se joignant en une seule 5 au poste d'assemblage de la plaque-support et de la plaque de surface. La première ligne 1, correspondant à la fabrication des plaques-supports, et comporte successivement un poste d'alimentation 7, un poste de formage 8, un poste de coupe 9 et un poste d'emmagasinage 11 des plaques-supports réalisées. Le poste d'alimentation 7 comprend une bobine de matière 13 à partir de laquelle est déroulée une bande d'aluminium 15, d'environ 7/10 mm et de largeur égale à celle des plaques à réaliser. Cette bande passe devant le poste de formage 8 ou d'emboutissage d'un logement en creux avec bord rentré vers l'intérieur, puis devant le poste de découpe 9, où elle est découpée en plaques 17 à la longueur des plaques à réaliser par un outil de grugeage d'extrémité classique.

Au poste d'emboutissage ou de formage, la bande est arrêtée à une position précise au regard de l'outil, le temps que l'opération d'emboutissage soit effectuée. L'outil de presse 19 (figure 3) est constitué d'une matrice inférieure 21 dont la forme interne est à fond plan et à bords supérieurs réguliers rentrés vers l'intérieur. Ces bords ont une section à saillie supérieure arrondie. La forme de la matrice correspond au logement 22 (figure 2) de la plaque de surface à former sur la plaque support. Elle est rectangulaire. Le poinçon 23 a une forme complémentaire de la matrice. Il est constitué de quatre parties 25 qui s'écartent latéralement en fin d'opération de presse sous la poussée d'une tige d'entraînement axiale 27, dont l'extrémité a une forme trapézoïdale en section et agit comme un coin sur les parties du poinçon jour les repousser vers l'extérieur à la fin de l'opération. La matrice inférieure 21 est également formée de quatre pièces 29 en bascule chacune sur un axe 31 qui leur permet de basculer latéralement vers l'intérieur en fin de course de presse, complémentairement au poinçon. Lorsque la presse remonte, le poinçon se referme et la matrice s'écarte, libérant ainsi la plaque support formée. Le bord du logement embouti est en forme de queue d'arronde (figure 2). Les plaques-supports découpées 17 ainsi formées sont acheminées sur un tapis de convoyage classique au poste de magasinage 11 où elles sont empilées.

La seconde ligne 3 disposée adjacente à la première, correspond à la fabrication des plaques de surface, destinées à être assemblées dans le logement 22 précédemment défini de la plaque-support. Cette ligne comporte à l'entrée les bobines d'alimentation 33, 35 respectivement du film adhésif réfléchissant de surface 37 et de la bande d'aluminium 39 au niveau inférieur, déroulées pour se rejoindre sur des rouleaux presseurs 41 où le film est appliqué sur la bande. La bande d'aluminium a une largeur légèrement inférieure à celle du logement 22 formé sur la plaque-support et son épaisseur est d'environ 2/10 mm ou moins. La bande ainsi revêtue est tirée jusqu'à un poste de coupe 43 à lame droite, où la bande est découpée en plaques 45 de longueur légèrement inférieure à celle du logement de la plaque support. Les plaques sont ensuite convoyées à un poste d'emmagasinage 47 où elles sont empilées. Au terme de cette ligne, et à faible distance de la ligne de convoyage précédente, un outil de manutention 49 prélève automatiquement les plaques de surfaces 45 une à une, soit sur un petit élément de convoyage 51, soit directement sur le dernier poste de magasinage 47, au moyen d'un bras rotatif 53 muni d'une plaque de prélèvement 55 (figure 4), laquelle a, une surface inférieure cintrée 57 et est reliée à un dispositif d'aspiration à ventouses (non représenté), de manière à cintrer légèrement la plaque de surface 45 à son prélèvement et permettre son insertion dans le logement 22 de la plaque-support, au moment de son application sur cette dernière à une position d'arrêt prédéterminée. En raison du cintrage, les dimensions de la plaque sont légèrement réduites, ce qui permet de la descendre avec un faible espace de jeu dans le logement de la plaque-support. A l'assemblage, l'aspiration est libérée et la plaque de surface reprend sa forme plane d'origine, étant retenue encastrée à faible jeu sur les bords rentrés 59 de son logement (figure 2).

Les plaques 61 ainsi obtenues sont alors acheminées à un poste d'emmagasinage 63 où elles sont empilées, prêtes au numérotage ultérieur.

Ce qui précède démontre bien les avantages énoncés de ce procédé de l'invention, à savoir l'optimisation de l'épaisseur de la plaque support ramenée à une valeur minimale de 0,7 mm au lieu de 1,2 mm, l'augmentation de sa rigidité par l'effet de nervurage raidisseur sur les bords formés malgré la diminution de l'épaisseur, l'amélioration de l'esthétique de la plaque par l'effet d'encadrement de la plaque de surface, une bonne mise en place de la plaque fine de surface dans son logement, parfaitement emprisonnée mais libre d'une légère dilatation pour le numérotage, l'utilisation d'outils classiques et de faible usure contrairement aux outils de semi-découpe périphérique sur la matière réfléchissante, l'absence de chute de matière sur la plaque fine et notamment en produit réfléchissant (gain d'environ 12%) et enfin une augmentation de la cadence de production, non limitée et astreinte (problème des chutes qui se décrochent mal) à un positionnement manuel comme dans le procédé courant actuel (3000 au lieu de 400).

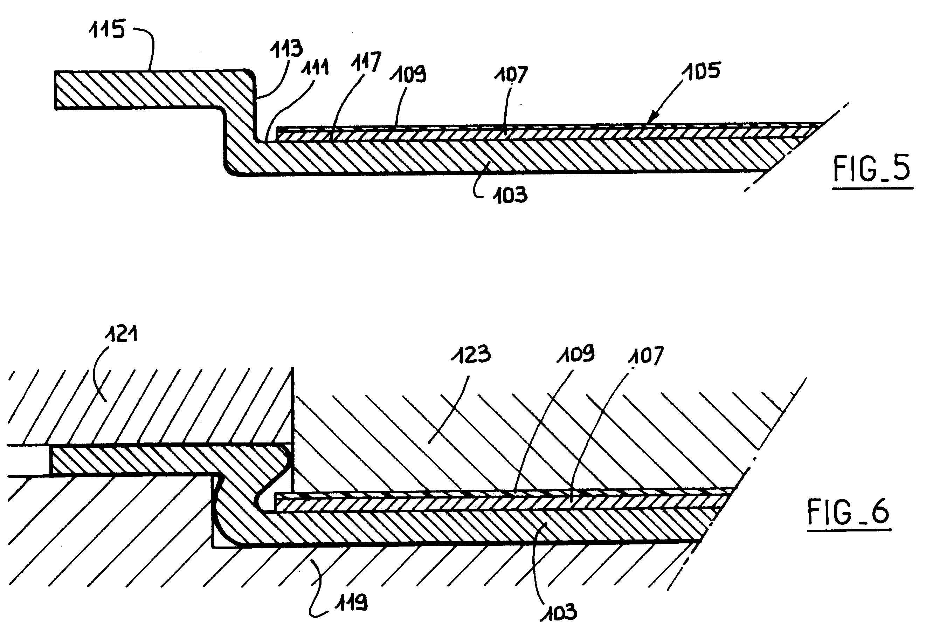

Le procédé de réalisation selon le second aspect précité de l'invention n'a pas été représenté. Il se déduit aisément de la structure de la plaque fabriquée décrite ci-après, en référence aux figures 5 et 6.

Avec référence à ces figures, une plaque d'immatriculation selon l'invention est constituée d'une plaque-support 103 épaisse rectangulaire en aluminium de format 520 x 110 mm et d'épaisseur 0,6 mm et d'une plaque fine de surface 105 disposée dans la partie centrale de la plaque-support 103 et sur laquelle seront formés ultérieurement les caractères ou numéros de la plaque définitive. La plaque fine 105 est également rectangulaire de dimension 510 x 100 mm, étant constituée d'un corps 107 en aluminium d'épaisseur 0,2 mm et d'une couche réfléchissante de surface 109 d'environ 0,1 mm d'épaisseur.

La plaque fine est posée dans un logement 111 formé en creux sur la plaque-support. Ce logement résulte d'une opération d'emboutissage classique de la plaque-support. Il comporte un bord droit régulier 113 de hauteur environ 3 mm. Il délimite la surface haute 115 de la plaque-support du fond 117 du logement 111 formé. Le logement est de dimensions légèrement supérieures à celle de la plaque fine.

La figure 6 montre la plaque fine 105 sertie dans la plaque support. Pour ce faire, l'opération de sertissage utilise un outil de presse constitué d'une matrice inférieure fixe 119, d'un poinçon 121 et d'un serre-flan 123 mobiles supérieurs.

La plaque support munie de sa plaque fine de surface est posée dans la matrice 119, laquelle est conformée en creux sensiblement aux dimensions de la surface inférieure de la plaque-support. Le serre-flan consiste en une pièce rectangulaire à bords droits et fond plan, conformée à des dimensions légèrement inférieures à celles du logement de la plaque-support. Il est destiné à venir s'appliquer en pression sur la plaque fine de surface posée dans son logement. L'élément de poinçon 121 a une forme également rectangulaire complémentaire de celle du serre-flan et sa surface inférieure est destinée à venir s'appliquer sur la surface supérieure 115 de la plaque support. Au cours de l'opération de sertissage de la plaque fine de surface, le bord 113 du logement de la plaque support est déformé sous la pression des outils et il rentre vers l'intérieur du logement. La déformation est limitée par l'amplitude de la pression et la forme de la matrice et du serre-flan correspondant de manière à emprisonner avec faible jeu latéral périphérique la plaque fine dans son logement.

A la fin de l'opération, le serre-flan et le poinçon sont relevés et la plaque résultante libérée est extraite sans difficulté de la matrice.

On notera à titre de variante qu'il est encore possible d'utiliser une plaque-support plane, de poser la plaque fine de surface centrée sur la plaque support, et de former et sertir simultanément le bord de la plaque support emprisonnant la plaque fine de surface (par des outils combinés).

Il est à noter que la fabrication d'une telle plaque peut être obtenue par un procédé en continu où les plaques-supports et plaques fines de surface sont issues de deux lignes de fabrication parallèles distinctes qui se rejoignent à la pose de la plaque fine sur la plaque-support . Cette pose peut être réalisée par un bras manipulateur classique (non représenté) prélevant par succion les plaques fines, par exemple, et les positionnant précisément sur les plaques-supports, de même que par un cylindre perforé prélevant par succion les plaques fines et les libérant à une position précise sur les plaques-supports amenées tangentiellement après une rotation donnée.

Les plaques obtenues garantissent un bon assemblage mécanique de la plaque de surface réfléchissante sur son support, facilitant la confection ultérieure des numéros, et optimisent l'utilisation des matières et notamment de la matière réfléchissante la plus coûteuse (sans perte). En outre, elle ne font appel qu'à des outils de coupe, formage, emboutissage et sertissage peu onéreux et évitent la limitation de la production à un positionnement manuel avant presse, comme dans le procédé classique actuel dit à doubles plaques.

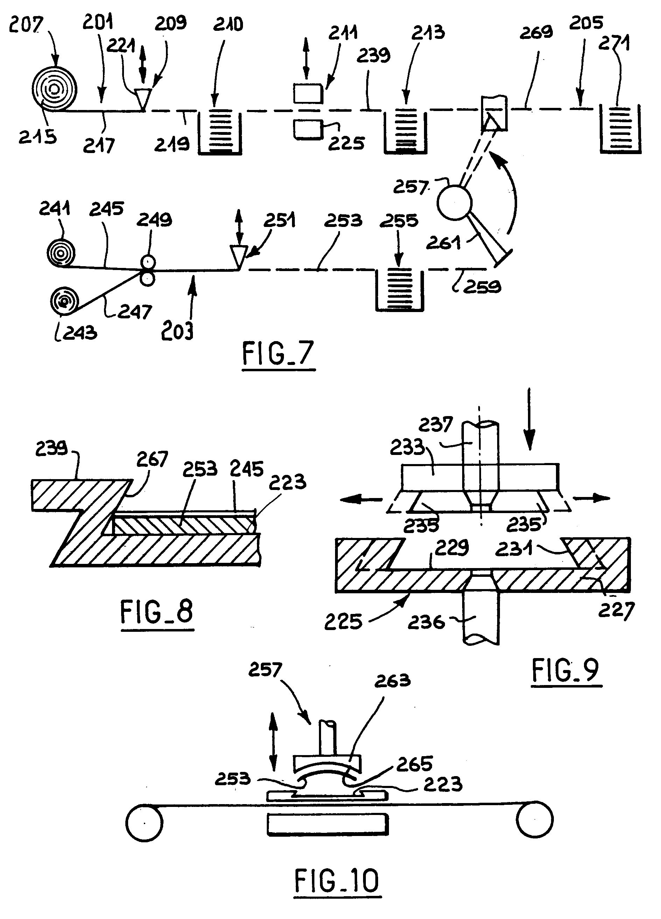

Le procédé selon le troisième aspect de l'invention est représenté à la figure 7, dans une chaîne de fabrication complète de plaques d'immatriculation fonctionnant en continu. Cette chaîne comporte deux lignes, respectivement 201 et 203, pour la fabrication de la plaque-support et de la plaque fine de surface des plaques d'immatriculation réalisées, ces deux lignes se joignant en une seule au poste d'assemblage de la plaque-support et de la plaque de surface. La première ligne 201, correspondant à la fabrication des plaques-supports brutes, comporte successivement un poste d'alimentation 207, un poste de coupe 209, un poste de magasinage 210, un poste de semi-découpe avec formage du bord 211, et un poste d'emmagasinage 213 des plaques-supports brutes réalisées. Le poste d'alimentation 207 comprend une bobine de matière 215 à partir de laquelle est déroulée une bande d'aluminium 217, d'environ 12/10 mm et de largeur égale à celle des plaques à réaliser. Cette bande passe devant le poste de découpe 209, où elle est découpée en plaques 219 à la longueur des plaques à réaliser, par un outil de coupe 221 à lame horizontale rectiligne, perpendiculaire à la ligne de bande.

Les plaques ainsi obtenues sont convoyées au poste d'emmagasinage 210 où elles sont empilées. Ces plaques sont ensuite acheminées au poste de presse 211 qui effectue une opération de semi-découpe avec formage latéral sur ces plaques de façon à former un logement 223 pour la plaque de surface qui sera assemblée ultérieurement. Les plaques convoyées à ce poste sont arrêtées à une position précise au regard de l'outil, le temps que l'opération de presse soit effectuée. L'outil de presse 225 (figure 3) est constitué d'une matrice inférieure 227 dont la forme interne est à fond plan 229 et à bords rectilignes 231 rentrés vers l'intérieur. Ces bords ont une section angulaire. La forme de la matrice correspond au logement de la plaque de surface à former sur la plaque support. Elle est rectangulaire. Le poinçon 233 a une forme complémentaire de la matrice, rectangulaire, avec des bords à section rectiligne angulaire aigus. Il est constitué de quatre parties 235 qui s'écartent latéralement en fin d'opération de presse sous la poussée d'une tige d'entraînement axiale 237, dont l'extrémité a une forme trapézoïdale en section et agit comme un coin sur les parties du poinçon pour les repousser vers l'extérieur (traits interrompus). La matrice inférieure 227 présente également une structure analogue à celle du poinçon, c'est-à-dire qu'elle est formée de quatre pièces qui peuvent s'écarter latéralement sous la poussée d'une tige d'entraînement 236 dont l'extrémité a une forme en coin, capable de repousser les quatre pièces vers l'extérieur (traits interrompus). Au cours de l'opération de presse, il est d'abord effectué une opération de semi-découpe classique où la matière de surface de la plaque en contact avec le poinçon est repoussée verticalement dans la plaque, puis une opération de formage du bord où les parties 235 du poinçon sont repoussées vers l'extérieur de façon à obtenir une forme en creux interne rectangulaire dont les bords sont en queue d'arronde (figure 2) et apte à recevoir la plaque de surface en son fond, retenue par ses bords. Les plaques-supports brutes 239 ainsi formées sont acheminées sur un tapis de convoyage classique au poste de magasinage 213 où elles sont empilées.

La seconde ligne 203 disposée adjacente à la première, correspond à la fabrication des plaques de surface, destinées à être assemblées dans le logement 223 précédemment défini de la plaque-support. Cette ligne comporte à l'entrée les bobines d'alimentation 241, 243 respectivement du film adhésif réfléchissant de surface 245 et de la bande d'aluminium 247 au niveau inférieur, déroulées pour se rejoindre sur des rouleaux presseurs 249 où le film est appliqué sur la bande. La bande d'aluminium 247 a la même largeur que celle du logement 223 formé sur la plaque-support et son épaisseur est d'environ 3/10 mm. La bande ainsi revêtue est tirée jusqu'à un poste de coupe 251 analogue à celui de la première ligne, à lame droite, où la bande est découpée en plaques 253 de longueur égale à celle du logement de la plaque support. Les plaques sont ensuite convoyées à un poste d'emmagasinage 255 où elles sont empilées. Au terme de cette ligne, et à faible distance de la ligne de convoyage précédente, un outil de manutention 257 prélève automatiquement les plaques de surfaces 253 une à une, soit sur un petit élément de covoyage 259, soit directement sur le dernier poste de magasinage 255, au moyen d'un bras rotatif 261 muni d'une plaque de prélèvement 263 (figure 4), laquelle a une surface inférieure cintrée 265 est est reliée à un dispositif d'aspiration à ventouses (non représenté), de manière à cintrer légèrement la plaque de surface 253 à son prélèvement et permettre son insertion dans le logement 223 de la plaque-support, au moment de son application sur cette dernière à une position d'arrêt prédéterminée. En raison du cintrage, les dimensions de la plaque sont légèrement réduites, ce qui permet de la descendre avec un faible espace de jeu dans le logement de la plaque-support. A l'assemblage, l'aspiration est libérée et la plaque de surface reprend sa forme plane d'origine, étant retenue encastrée à très faible jeu sur les bords rentrés 267 de son logement (figure 2).

Les plaques 269 ainsi obtenues sont alors acheminées à un poste d'emmagasinage 271 où elles sont empilées, prêtes au numérotage ultérieur.

De telles plaques permettent d'obtenir un encastrement parfait de la plaque de surface réfléchissante, et une perte en plaque de surface pratiquement nulle. Elles ne font appel qu'à des outils de coupe et formage peu onéreux. La cadence de production, n'étant pas limitée par un positionnement manuel avant presse, peut être importante, d'environ 2000 plaques à l'heure. Enfin, l'espace de jeu en fond de logement de la plaque de surface dans ce dernier évite son bombage lors de la numérotation ultérieure.

## Revendications

1. Procédé de fabrication de plaques minéralogiques, notamment de plaques du type dit à doubles plaques, réflectorisées ou non, comportant la fabrication de plaques-supports brutes et de plaques fines de surface, les plaques fines de surface sur lesquelles sont formés les caractères de la plaque à réaliser étant assemblées respectivement sur les plaques-supports, où il fait intervenir les étapes suivantes :
- la fabrication de plaques-supports brutes (17, 103, 219), découpées aux dimensions de la plaque à réaliser, et formées avec un logement approprié en creux (22, 111, 223) préalablement à l'assemblage de la plaque fine, ledit logement étant délimité par un bord périphérique régulier, apte à recevoir à faible jeu une plaque fine de surface (45, 105, 253) introduite à l'intérieur, plaque fine sur laquelle seront formés de façon classique les caractères de la plaque à réaliser ;
- la fabrication desdites plaques fines de surface (45, 105, 253) découpées à des dimensions légèrement inférieures a celles dudit logement formé sur la plaque-support ; et
- l'introduction de la plaque fine à l'intérieur dudit logement, et l'assemblage de ladite seconde plaque fine (45, 105, 253) de surface et de la plaque-support (17, 103, 219), à l'aide d'au moins deux parties latérales parallèles de bord du logement de ladite plaque-support faisant saillie vers l'intérieur du logement (22, 11, 223) au-dessus de la plaque fine, de manière à constituer une plaque prête à être numérotée avant pose sur le véhicule.

2. Dispositif pour la mise en oeuvre du procédé défini à la revendication 1 en continu, où il comprend deux lignes de fabrication, à savoir une première ligne de fabrication des plaques support (1), comportant un poste d'alimentation (7) en rouleaux d'une bande d'aluminium (15) à l'épaisseur et largeur des plaques à réaliser, cette bande étant emboutie avec un logement en creux (22) avec bord rentré vers l'intérieur (59) apte à loger ladite seconde plaque de surface avec un faible jeu sur son bord puis découpée en plaques-supports à la longueur des plaques à réaliser, lesquelles sont ensuite empilées dans un poste de magasinage (11) des plaques-supports en bout de ligne, et une seconde ligne de fabrication (3) des plaques fines de surface, comportant un poste d'alimentation en rouleaux (33, 35) d'une bande d'aluminium (39) revêtue ou non d'une couche réflèchissante (37) en surface, cette bande de largeur légèrement inférieure à celle du logement (22) formé sur la plaque-support étant découpée en plaques fines de surfaces (45), à une longueur légèrement inférieure à celle dudit logement de la plaque support, lesquelles sont emmagasinées par empilage en bout de cette seconde ligne, les deux lignes précédentes étant rassemblées en une seule (5) par un poste d'assemblage de la plaque fine sur la plaque-support, ce poste étant essentiellement constitué d'un outil de manutention automatique (49) prélevant successivement une plaque fine (45) d'une pile en bout de seconde ligne et la déposant précisément en regard du logement (22) de la plaque-support convoyée sur la ligne de jonction (5) et l'appliquant dans son logement, les plaques ainsi assemblées (61) étant empilées en bout de ligne.

3. Dispositif selon la revendication 2, caractérisé en ce que l'alimentation de la seconde ligne (3) est constituée par un rouleau ou bobine (35) d'une bande d'aluminium (39) de faible épaisseur et de largeur légèrement inférieure à celle du logement (22) formé sur la plaque-support, et par un rouleau (33) de film adhésif réfléchissant (37) de même largeur que la bande d'aluminium et appliqué sur cette dernière par des rouleaux presseurs (41).

4. Dispositif selon la revendication 2 ou 3, caractérisé en ce que l'outil de formage ou d'emboutissage (19) sur la ligne des plaques-supports comporte une matrice inférieure rectangulaire (21) à fond plan et bords réguliers rentrés vers l'intérieur au niveau supérieur et un poinçon mobile supérieur (23) de section complémentaire de celui de la matrice et constitué de quatre parties (25) qui s'écartent à la fin de l'opération sous la poussée d'une tige axiale d'entraînement (27) dont l'extrémité a une section conformée pour agir en coin sur lesdites parties du poinçon et les repousser latéralement contre le profil de matrice de manière que le formage résultant du bord (59) du logement soit en queue d'aronde, la matrice étant également formée de quatre pièces (29) en bascule chacune sur un axe (31), qui peuvent se refermer latéralement sous la poussée en fin d'opération et qui se libèrent au retrait de la presse.

5. Dispositif selon l'une des revendications 2 à 4, caractérisé en ce que l'outil de manutention automatique (49) comporte une plaque de prélèvement (55) à surface inférieure (57) cintrée concave reliée à un dispositif d'aspiration à ventouses. permettant l'assemblage de la plaque de surface (45) en formation cintrée dans le logement (22) de la plaque-support, cette plaque une fois libérée revenant dans sa formation naturelle plane retenue encastrée avec très faible jeu par les bords rentrés (59) du logement.

6. Procédé selon la revendication 1, caractérisé en ce qu'il consiste en ce que:
- dans le traitement desdites plaques-supports (103) en vue de former le logement (111) pour la seconde plaque fine de surface (105), ce logement est conformé avec un bord régulier (113) suffisant pour permettre sa déformation ; et en ce que
- l'assemblage de la plaque fine (105) et de la plaque-support (103) est obtenue par une opération de sertissage du bord (113) du logement de la plaque-support, la plaque fine de surface étant découpée à des dimensions très légèrement inférieures à celles dudit logement (111) formé sur la plaque-support, l'opération de sertissage susdite s'effectuant au moyen d'un outil de presse constitué d'une matrice inférieure (119), d'un poinçon (121) et d'un serre-flanc (123) mobiles supérieurs, le serre-flan venant sur la plaque fine de surface (105), le poinçon sur la surface haute (115) délimitée par le bord du logement de la plaque support, et la matrice recevant la plaque-support par sa surface inférieure de sorte que lors de l'opération de sertissage, le bord (113) du logement de la plaque-support est déformé sous la pression des outils et il rentre vers l'intérieur du logement, la déformation étant limitée par l'amplitude de la pression de presse et par la forme de la matrice et du serre-flan correspondant, de manière à emprisonner avec faible jeu périphérique latéral la plaque fine dans son logement.

7. Procédé selon la revendication 6, caractérisé en ce que les dimensions relatives de la plaque fine (105) et de son logement (111), de même que le sertissage de cette dernière dans son logement sont déterminés pour conférer à l'assemblage résultant un faible jeu permettant l'extension de la plaque fine sans déformation lors du numérotage ultérieur.

8. Procédé selon l'une des revendications 6, 7, caractérisé en ce que le logement (111) de la plaque support est issu d'une opération d'emboutissage de la plaque support.

9. Procédé selon l'une des revendications précédentes 6-8, caractérisé en ce que l'on utilise une plaque support plane (103), on pose la plaque fine de surface (105) centrée sur la plaque-support, et on forme et sertit simultanément un bord de la plaque-support emprisonnant la plaque fine de surface (par des outils combinés).

10. Procédé selon l'une des revendications 6-9, caractérisé en ce qu'il consiste en un procédé en continu où les plaques-supports (103) et plaques fines de surface (105) sont issues de deux lignes de fabrication parallèles distinctes qui se rejoignent à la pose de la plaque fine sur la plaque-support.

11. Procédé selon la revendication 1, caractérisé en ce qu'il consiste à former le logement (223) pour la seconde plaque fine de surface (253) par la semi-découpe des plaques-supports (219) suivie d'une expansion latérale interne périphérique du poinçon sur la matrice de l'outil (225) en fin de semi-découpe, le bord interne périphérique (267) du logement formé étant rentré vers l'intérieur.

12. Dispositif pour la mise en oeuvre du procédé de fabrication de plaques minéralogiques selon la revendication 11, où, fonctionnant en continu, il inclut deux lignes de fabrication, à savoir une première ligne de fabrication des plaques support (201), comportant un poste d'alimentation (207) en rouleaux d'une bande d'aluminium (217) à l'épaisseur et largeur des plaques à réaliser, cette bande étant découpée en plaques-supports brutes à la longueur des plaques à réaliser, lesquelles sont emmagasinées par empilage avant de parvenir par un moyen de convoyage à un poste de semi-découpe et formage (211) où le logement d'encastrement (223) de la plaque fine de surface est formé, les plaques-supports ainsi obtenues étant ensuite empilées dans un poste de magasinage (213) des plaques-supports en bout de ligne, et une seconde ligne de fabrication (203) des plaques fines de surface, comportant un poste d'alimentation en rouleaux (241, 243) d'une bande d'aluminium (247) revêtue d'une couche réflèchissante en surface, cette bande de largeur égale à celle du logement (223) formé sur la plaque-support étant découpée en plaques fines de surfaces, à la longueur dudit logement de la plaque support, lesquelles sont emmagasinées par empilage en bout de cette seconde ligne, les deux lignes précédentes étant rassemblées en une seule par un poste d'assemblage de la plaque fine sur la plaque- support, ce poste étant essentiellement constitué d'un outil de manutention automatique (257) prélevant successivement une plaque fine d'une pile en bout de seconde ligne et la déposant précisément en regard du logement (223) de la plaque-support convoyée sur la ligne de jonction et l'appliquant dans son logement, les plaques ainsi assemblées étant empilées en bout de ligne.

13. Dispositif selon la revendication 12, caractérisé en ce que l'alimentation de la seconde ligne (203) est constituée par un rouleau ou bobine (243) d'une bande d'aluminium (247) de faible épaisseur et de largeur celle du logement (223) formé sur la plaque-support, et par un rouleau (241) de film adhésif réfléchissant (245) de même largeur que la bande d'aluminium et appliqué sur cette dernière par des rouleaux presseurs (249).

14. Dispositif selon la revendication 12 ou 13, caractérisé en ce que l'outil de semi-découpe et formage (225) sur la ligne des plaques-supports comporte une matrice inférieure rectangulaire (227) à fond plan (229) et bords réguliers (231) rentrés vers l'intérieur à profil angulaire aigu et un poinçon mobile supérieur (233) de section complémentaire de celui de la matrice et constitué de quatre parties (235) qui s'écartent à la fin de l'opération de semi-découpe sous la poussée d'une tige axiale d'entraînement (237) dont l'extrémité a une section conformée pour agir en coin sur lesdites parties du poinçon et les repousser latéralement contre le profil de matrice de manière que le formage résultant du bord (267) du logement soit en queue d'aronde, la matrice étant également formée de quatre pièces qui peuvent s'écarter latéralement sous la poussée d'une tige d'entraînement (236) dont l'extrémité a une forme en coin capable de repousser les quatre pièces vers l'extérieur.

15. Dispositif selon l'une des revendications 12 à 14, caractérisé en ce que l'outil de manutention automatique (257) comporte une plaque de prélèvement (263) à surface inférieure (265) cintrée concave reliée à un dispositif d'aspiration à ventouses. permettant l'assemblage de la plaque de surface (253) en formation cintrée dans le logement (223) de la plaque-support, cette plaque une fois libérée revenant dans sa formation naturelle plane retenue encastrée avec très faible jeu par les bords rentrés (267) du logement.

16. Plaque minéralogique obtenue par la mise en oeuvre du procédé et dispositif définis aux revendications précédentes, où elle est du type à doubles plaques, comportant une plaque-support épaisse (17, 103, 219) et une plaque de surface fine (45, 105, 253), la plaque de surface étant insérée dans un logement formé sur la plaque-support et retenue dans ce logement par au moins deux parties latérales de la plaque-support tournées vers l'intérieur du logement au-dessus de la plaque fine.

## Claims

1. A process for producing license plates, in particular those of the double plate type, which may or may not be reflective, comprising the manufacture of rough support plates and thin top plates, the thin top places, on which are formed the characters of the plates to be produced, being fitted respectively to the support plates, wherein the following steps are carried out:
- manufacture of rough support plates (17, 103, 219), cut to the dimensions of the plate to be produced and formed to exhibit a suitable recessed receptacle (22, 111, 223) prior to fitting of the thin plate, said receptacle being defined by a regular peripheral edge capable of receiving with little play a thin top plate (45, 105, 253) inserted therein, said thin plate having formed on it in conventional manner the characters of the plate to be produced;
- manufacture of said thin top plates (45, 105, 253) cut to slightly smaller dimensions than those of said receptacle formed in the support plate; and
- introduction of the thin plate into said receptacle, and fitting together of said second, thin top plate (45, 105, 253) and the support plate (17, 103, 219), with the aid of at least two parallel peripheral side parts of the receptacle of said support plate projecting towards the inside of the receptacle (22, 11, 223) above the thin plate, in such a way as to constitute a plate ready to be numbered before positioning on the vehicle.

2. A device for carrying out the process defined in claim 1 in continuous manner, wherein it comprises two production lines, i.e. a first production lines for the support plates (1), comprising a feed station (7) for supplying rolls of aluminium strip (15) of the thickness and width of the plates to be produced, this strip being stamped to produce a recessed receptacle (22) with inwardly directed edge (59) capable of accommodating said second, top plate with slight play at its edge and then cut into support plates of the length of the plates to be produced, which are then stacked at a support plate storage station (11) at the line end, and a second production line (3) for thin top plates, comprising a feed station for supplying rolls (33, 35) of aluminium strip (39), which may or may not be coated with a reflective surface layer (37), this strip, which is slightly narrower than the receptacle (22) formed in the support plate, being cut into thin top plates (45) slightly shorter than the receptacle in the support plate, these top plates being stored by stacking at the end of this second line, the above two lines coming together into a single line (5) at a fitting station at which the thin plate is fitted to the support plate, this station consisting substantially of an automatic handling tool (49) lifting thin plates (45) successively, one at a time, from a pile at the end of the second line and depositing it precisely with respect to the receptacle (22) in the support plate conveyed along the joint line (5) and applying it in its receptacle, the plates thus assembled (61) being stacked at the line end.

3. A device according to claim 2, characterised in that the supply means for the second line (3) consists of a roll or spool (35) of thin aluminium strip (39) slightly narrower than the receptacle (22) formed in the support plate, and of a roll (33) of reflective adhesive film (37) of the same width as the aluminium strip and applied thereto by pressure rolls (41).

4. A device according to claim 2 or claim 3, characterised in that the forming or stamping tool (19) or the support plate line comprises a rectangular lower die (21) with a flat base and regular edges directed inwards at the top and an upper movable punch (23) complementary in section to the die and consisting of four parts (25) which move apart at the end of the operation under pressure from an axial drive rod (27), the end of which has a section so shaped as to act as a wedge on said parts of the punch and push them sideways against the contours of the die in such a way that the edge (59) of the receptacle takes on a dovetailed shape, the die also consisting of four components (29) each of which rocks about an shaft (31), which four components may close together laterally under the pressure at the end of the operation and which are released on withdrawal of the press.

5. A device according to any one of claims 2 to 4, characterized in that the automatic handling tool (49) comprises a lifting plate (55) with a concavely arched lower surface (57) and connected to a suction pad device, permitting fitting of the top plate (45) in arched form into the receptacle (22) of the support plate, this plate returning to its natural flat shape once released and being held in recessed manner with very little play by the inwardly directed edges (59) of the receptacle.

6. A process according to claim 1, characterised in that it comprises the following:
- during processing of said support plates (103) with a view to forming the receptacle (11) for the second, thin top plate (105), this receptacle is provided with a regular edge (113) which is sufficient to permit deformation thereof; and in that
- fitting together of the thin plate (105) and the support plate (103) is achieved by effecting crimping of the edge (113) of the support plate receptacle, the thin top plate being cut to dimensions which are very slightly less than those of said receptacle (111) formed in the support plate, the above-mentioned crimping operation being effected by means of a press tool consisting of a lower die (119), and an upper mobile punch (121) and pressure pad (123), the pressure pad coming into contact with the thin top plate (105), the punch coming into contact with the top surface (115) defined by the edge of the receptacle of the support plate, and the die receiving the support plate by its lower surface in such a way that, during the crimping operation, the edge (113) of the receptacle of the support plate is deformed under the pressure of the tools and is turned towards the inside of the receptacle, said deformation being restricted by the degree of press pressure and by the shape of the die and corresponding pressure pad, in such a way as to trap the thin plate in its receptacle with slight lateral peripheral play.

7. A process according to claim 6, characterised in that the relative dimensions of the thin plate (105) and its receptacle (111), together with the crimping thereof into its receptacle are such that they provide the resultant assembly with slight play permitting extension of the thin plate without deformation during the subsequent numbering process.

8. A process according to either one of claims 6 end 7, characterised in that the receptacle (11) of the support plate results from a stamping operation carried out on the support plate.

9. A process according to any one of preceding claims 6-8, characterised in that a flat support plate (103) is used, the thin top plate (105) is positioned in centred manner on the support plate, and a support plate edge is formed and crimped simultaneously to trap the thin top plate (using combined tools).

10. A process according to any one of claims 6-9, characterised in that it consists of a continuous process in which the support plates (103) and thin top plates (105) arrive on two separate parallel production lines which meet at the point where the thin plate is positioned on the support plate.

11. A process according to claim 1, characterised in that it consists in forming the receptacle (223) for the second, thin top plate (253) by half-cutting of the support plates (219) followed by internal lateral peripheral expansion of the punch on the die of the tool (225) towards the end of the half-cutting process, the inner peripheral edge (267) of the receptacle thus formed being turned inwards.

12. A device for carrying out the process for producing licence plates according to claim 11, wherein, operating in continuous manner, it comprises two production lines, i.e. a first production lines for the support plates (201), comprising a feed station (207) for supplying rolls of aluminium strip (217) of the thickness and width of the plates to be produced, this strip being cut into rough support plates of the length of the plates to be produced, which are stored by stacking prior to arriving via a conveying means at a half-cutting and forming station (211), where the recessed receptacle (223) for the thin top plate is formed, the support plates thus obtained then being stacked at a support plate storage station (213) at the line end, and a second production line (203) for thin top plates, comprising a feed station for supplying rolls (241, 243) of aluminium strip (247) coated with a reflective surface layer, this strip, which is of the same width as the receptacle (223) formed in the support plate, being cut into thin surface plates of the length of said receptacle in the support plate, these top plates being stored by stacking at the end of this second line, the above two lines coming together into a single line at a fitting station at which the thin plate is fitted to the support plate, this station consisting substantially of an automatic handling tool (257) lifting thin plates successively, one at a time, from a pile at the end of the second line and depositing it precisely with respect to the receptacle (223) in the support plate conveyed along the joint line and applying it in its receptacle, the plates thus assembled being stacked at the line end.

13. A device according to claim 12, characterised in that the supply means for the second line (203) consists of a roll or spool (243) of thin aluminium strip (247) of the width of the receptacle (223) formed in the support plate, and of a a roll (241) of reflective adhesive film (245) of the same width as the aluminium strip and applied thereto by pressure rolls (249).

14. A device according to claim 12 or claim 13, characterised in that the half-cutting and shaping tool (225) on the support plate line comprises a rectangular lower die (227) with a flat base and regular edges (231) directed inwards and having an angular profile and an upper mobile punch (233) complementary in section to the die and consisting of four parts (235) which move apart at the end of the half-cutting operation under pressure from an axial drive rod (237), the end of which has a section so shaped as to act as a wedge on said parts of the punch and push them sideways against the contours of the die in such a way that the edge (267) of the receptacle takes on a dove-tailed shape, the die also consisting of four componants which may move apart sideways under the pressure from a drive rod (236), the end of which is wedge-shaped and is capable of pushing the four components outwards.

15. A device according to any one of claims 12 to 14, characterised in that the automatic handling tool (257) comprises a lifting plate (263) with a concavely arched lower surface (265) and connected to a suction pad device, permitting fitting of the top plate (253) in arched form into the receptacle (223) of the support plate, this plate returning to its natural flat shape once released and being held in recessed manner with very little play by the inwardly directed edges (267) of the receptacle.

16. A licence plate produced by implementation of the process and device defined in the preceding claims, wherein it is of the double plate type, comprising a thick support plate (17, 103, 219) and a thin top plate (45, 105, 253), the top plate being inserted into a receptacle formed in the support plate and held in this receptacle by at least two side parts of the support plate turned towards the inside of the receptacle above the thin plate.

## Patentansprüche

1. Verfahren zur Herstellung von Kennzeichenschildern, insbesondere sogenannten reflektierenden oder nicht-reflektierenden Doppelplattenschildern, welches die Anfertigung von rohen Trägerplatten und feinen Deckplatten umfaßt, wobei die feinen Deckplatten, auf welchen die Zeichen des herzustellenden Schildes gebildet werden, jeweils auf den Trägerplatten montiert werden, bei welchen die folgenden Schritte ausgeführt werden:
- Anfertigung der rohen Trägernlatten (17, 103, 219), die auf die Abmessungen des herzustellenden Schildes zugeschnitten und mit einer geeigneten vertieften Aufnahme (22, 111, 223) vor der Montage der feinen Platte ausgebildet werden, wobei die Aufnahme von einem regelmäßigen umlaufenden Rand begrenzt wird und dazu geeignet ist, mit geringem Spiel eine feine Deckplatte (45, 105, 253) aufzunehmen, die dort eingebracht wird, wobei auf der feinen Deckplatte die Zeichen des herzustellenden Schildes in herkömmlicher Weise gebildet sind;
- Anfertigung der feinen Deckplatten (45, 105, 253), welche auf etwas geringere Abmessungen als jene der Aufnahme zugeschnitten sind, welche auf der Trägerplatte ausgebildet ist; und
- Einsetzen der feinen Deckplatte in den Innenraum der Aufnahme und Zusammenbauen der zweiten feinen Deckplatte (45, 105, 253) und der Trägerplatte (17, 103, 219) mit Hilfe von mindestens zwei seitlichen Abschnitten, die parallel zum Rand der Aufnahme in der Trägerplatte verlaufen und nach innen in die Aufnahme (22, 11, 223) über der feinen Platte in der Weise vorspringen, daß ein zur Numerierung vor Anbringung auf dem Fahrzeug fertiges Schild gebildet wird.

2. Vorrichtung zur kontinuierlichen Durchführung des Verfahrens nach Anspruch 1, bei welcher zwei Fertigungsstraßen vorgesehen sind, nämlich eine erste Fertigungsstraße zur Herstellung der Trägerplatten (1), die eine Zuführstation (7) zur Zuführung eines bandförmigen Aluminiumblechs (15) mit der Stärke und der Breite der herzustellenden Schilder von Rollen umfaßt, wobei dieser Blechstreifen mit einer hohlen Aufnahme (22) gezogen wird, die einen nach innen vorspringenden Rand (59) aufweist, die zur Aufnahme der zweiten Deckplatte mit geringem Spiel auf dem Rand geeignet ist, und wobei der Streifen dann in Trägerplatten mit der Länge der herzustellenden Schilder geschnitten wird, welche anschließend in einer Speicherstation (11) für die Trägerplatten am Ende der Fertigungsstraße gestapelt werden, sowie eine zweite Fertigungsstraße (3) zur Herstellung der feinen Deckplatten, welche eine Zuführstation (33, 35) zur Zuführung eines gegebenenfalls auf der Oberseite mit einer reflektierenden Beschichtung versehenen bandförmigen Aluminiumblechs (39) von Rollen, wobei dieser Blechstreifen, der eine etwas geringere Breite als die auf der Trägerplatte ausgebildete Aufnahme (22) aufweist, in feine Deckplatten (45) mit einer etwas geringeren Länge als die auf der Trägerplatte ausgebildete Aufnahme geschnitten wird, und die Streifen am Ende dieser zweiten Fertigungsstraße unter Stapelung gespeichert werden, wobei bei dieser Vorrichtung die beiden genannten Fertigungsstraßen von einer Montagestation zur Montage der feinen Platte auf der Trägerplatte zu einer Straße (5) zusammengeführt sind, wobei diese Station im wesentlichen aus einem Werkzeug (49) zur automatischen Förderung besteht, welches nacheinander eine feine Platte (45) von einem Stapel am Ende der zweiten Straße abnimmt und genau gegenüber der Aufnahme (22) auf der Trägerplatte, welche auf der Verbindungsstraße (5) herangeführt wird, ablegt und in die entsprechende Aufnahme einpaßt, wobei die so zusammengefügten Platten (61) am Ende der Straße gestapelt werden.

3. Vorrichtung nach Anspruch 2, dadurch gekennzeichnet, daß die Zuführung an der zweiten Straße (3) aus einer Rolle bzw. Trommel (35) mit streifenförmigem Aluminiumblech (39) von geringer Stärke und etwas kleinerer Breite als die Breite der auf der Trägerplatte gebildeten Aufnahme (22) sowie aus einer Rolle (33) mit reflektierendem Klebfilm (37) besteht, welcher die gleiche Breite wie das Aluminiumblech aufweist und auf dieses mittels Andruckrollen (41) aufgebracht wird.

4. Vorrichtung nach Anspruch 2 oder 3, dadurch gekennzeichnet, daß das Form- bzw. Tiefziehwerkzeug (19) auf der Fertigungsstraße für die Trägerplatten ein unteres rechteckförmiges Untergesenk (21) mit ebenem Boden und regelmäßigen Rändern aufweist, die auf einem oberen Niveau nach innen einspringen, sowie ein oberes bewegliches Stößelgesenk (23), dessen Querschnitt komplementär zum Querschnitt des Untergesenks ist und das aus vier Teilen (25) besteht, die sich nach Beendigung des Arbeitsgangs unter Einwirkung der Schubkraft einer axialen Antriebsstange (27) spreizen, deren Ende einen so ausgeformten Querschnitt aufweist, daß sie keilartig auf die Teile des Stößelgesenks einwirkt und diese seitlich gegen das Profil des Untergesenks in der Weise treibt, daß die sich dabei ergebende Ausformung des Randes (59) der Aufnahme schwalbenschwanzförmig ist, wobei das Untergesenk ebenfalls aus vier Teilen (29) gebildet ist, welche jeweils auf einer Achse (31) kippbar angeordnet sind und sich bei Ende des Arbeitsgangs seitlich unter der Einwirkung der Schubkraft wieder schließen können und beim Herausziehen aus der Presse wieder freisetzbar sind.

5. Vorrichtung nach einem der Ansprüche 2 bis 4, dadurch gekennzeichnet, daß das Werkzeug (49) zur automatischen Förderung eine Entnahmeplatte (55) mit einer konkaven Wölbung auf der Unterseite (57) aufweist, welche mit einer Ansaugvorrichtung mit Düsen verbunden ist, wobei sie die Montage der Deckplatte (45) in aufgewölbter Form in der Aufnahme (22) in der Trägerplatte gestattet, und wobei diese Deckplatte gleich nach ihrer Freigabe wieder in ihre natürliche flache Form zurückkehrt, in der sie mit sehr geringem Spiel von den einspringenden Kanten (59) der Aufnahme im eingesetzten Zustand gehalten wird.

6. Verfahren nach Anspruch 1, dadurch gekennzeichnet, daß es aus folgenden Arbeitsgängen besteht:
- der Ausformung der Aufnahme mit einem ausreichenden regelmäßigen Rand (113), der eine Verformung zuläßt, bei der Behandlung der Trägerplatten (103) zur Ausbildung der Aufnahme (111) für die zweite feine Deckplatte (105); sowie
- dem Zusammenbau der feinen Platte (105) und der Trägerplatte (103), welcher durch einen Arbeitsgang unter Falzverbindung des Randes (113) der Aufnahme in der Trägerplatte erreicht wird, wobei die feine Deckplatte auf etwas geringere Abmessungen als die auf der Trägerplatte ausgebildete Aufnahme (111) zugeschnitten ist, und wobei der Arbeitsgang der Falzverbindung mit Hilfe eines Preßwerkzeugs vorgenommen wird, das aus einem Untergesenk (119), einem beweglichen oberen Stößelgesenk (121) und einem beweglichen oberen Blechhalter (123) besteht, wobei der Blechhalter auf die feine Deckplatte (105) gelangt und das Stößelgesenk auf der oberen Seite (115) vom Rand der Aufnahme der Trägerplatte begrenzt wird, und wobei das Untergesenk die Trägerplatte mit dessen Unterseite in der Weise aufnimmt, daß während des Arbeitsgangs unter Falzung der Rand (113) der Aufnahme der Trägerplatte unter der Einwirkung des Drucks der Werkzeuge verformt wird und nach innen in die Aufnahme hinein bewegt wird, wobei die Verformung durch die Amplitude des Pressendrucks und durch die Form des Untergesenks sowie des entsprechenden Blechhalters in der Weise begrenzt wird, daß die feine Platte in ihrer Aufnahme mit geringem seitlichen Spiel auf dem Umfang eingelassen wird.

7. Verfahren nach Anspruch 6, dadurch gekennzeichnet, daß die relativen Abmessungen der feinen Platte (105) und ihrer Aufnahme (111) und ebenso die Falzverbindung derselben in ihrer Aufnahme so festgelegt sind, daß bei der sich dabei ergebenden Montage ein geringes Spiel gebildet wird welches die verformungsfreie Ausdehnung der feinen Platte während der späteren Anbringung der Nummer gestattet.

8. Verfahren nach einem der Ansprüche 6 und 7, dadurch gekennzeichnet, daß die Aufnahme (111) der Trägerplatten das Ergebnis eines Arbeitsgangs unter Tiefziehen der Trägerplatte ist.

9. Verfahren nach einem der vorstehenden Ansprüche 6 bis 8, dadurch gekennzeichnet, daß eine flache Trägerplatte (103) verwendet wird, die feine Deckplatte (105) zentriert auf die Trägerplatte aufgelegt wird, und unter Einschluß der feinen Deckplatte (mit Hilfe kombinierter Werkzeuge) ein Rand der Trägerplatte geformt und gleichzeitig gefalzt wird.

10. Verfahren nach einem der Ansprüche 6 bis 9, dadurch gekennzeichnet, daß es aus einem kontinuierlichen Arbeitsablauf besteht, bei welchem die Trägerplatten (103) und die feinen Deckplatten (103) von zwei parallelen getrennten Fertigungsstraßen abgegeben werden, die bei der Einlegung der feinen Platte auf der Trägerplatte zusammenlaufen.

11. Verfahren nach Anspruch 1, dadurch gekennzeichnet, daß es aus den folgenden Arbeitsgängen besteht: Ausbildung der Aufnahme (223) für die zweite feine Deckplatte (253) durch halben Schnitt der Trägerplatten (219) und anschließende seitliche innere Aufweitung des Gesenkstößels entlang des Umfangs auf dem Gesenk des Werkzeugs (225) bei Ende des Vorgangs des halben Schnitts, wobei der geformte umlaufende innere Rand (267) der Aufnahme zum Einspringen nach innen veranlaßt wird.

12. Vorrichtung zur Durchführung des Verfahrens zur Herstellung von Kennzeichenschildern nach Anspruch 11, bei welcher zwei kontinuierlich arbeitende Fertigungsstraßen vorgesehen sind, nämlich eine erste Fertigungsstraße zur Herstellung von Trägerplatten (201), welche eine Zuführstation (207) zur Zuführung eines bandförmigen Aluminiumblechs (217) mit der Stärke und der Breite der herzustellenden Schilder von Rollen umfaßt, wobei dieser Blechstreifen in rohe Trägerplatten mit der Länge der herzustellenden Schilder geschnitten wird, welche durch Stapelung gespeichert werden, ehe sie mittels einer Fördereinrichtung an eine Station zum halben Schnitt und zur Formung (211) gelangen, wo die Aufnahme zur Einsenkung (223) der feinen Deckplatte geformt wird, wobei die so gebildeten Trägerplatten anschließend in einer Speicherstation (213) für die Trägerplatten am Ende der Fertigungsstraße gestapelt werden, sowie eine zweite Fertigungsstraße (203) zur Herstellung der feinen Deckplatten, welche eine Zuführstation (241, 243) zur Zuführung eines auf der Oberseite mit einer reflektierenden Schicht überzogenen bandförmigen Aluminiumblechs (247) von Rollen, wobei dieser Blechstreifen, der die gleiche Breite wie die auf der Trägerplatte gebildete Aufnahme (223) aufweist, in feine Deckplatten mit derselben Länge wie die auf der Trägerplatte ausgebildete Aufnahme geschnitten wird, und die Streifen am Ende dieser zweiten Fertigungsstraße unter Stapelung gespeichert werden, und wobei die beiden genannten Fertigungsstraßen von einer Montagestation zur Montage der feinen Platte auf der Trägerplatte zu einer Straße zusammengeführt sind, wobei diese Station im wesentlichen aus einem Werkzeug (257) zur automatischen Förderung besteht, welches nacheinander eine feine Platte (45) von einem Stapel am Ende der zweiten Straße abnimmt und genau gegenüber der Aufnahme (223) auf der Trägerplatte, welche auf der Verbindungsstraße herangeführt wird, ablegt und in die entsprechende Aufnahme einpaßt, wobei die so zusammengefügten Platten am Ende der Straße gestapelt werden.

13. Vorrichtung nach Anspruch 12, dadurch gekennzeichnet, daß die Zuführung an der zweiten Fertigungsstraße (203) aus einer Rolle bzw. Trommel (243) mit streifenförmigem Aluminiumblech (247) von geringer Stärke und gleicher Breite wie die Breite der auf der Trägerplatte gebildeten Aufnahme (223) sowie aus einer Rolle (241) mit reflektierendem Klebfilm (245) besteht, welcher die gleiche Breite wie das Aluminiumblech aufweist und auf dieses mittels Andruckrollen (249) aufgebracht wird.

14. Vorrichtung nach Anspruch 12 oder 13, dadurch gekennzeichnet, daß das Werkzeug für den halben Schnitt und die Formung (225) auf der Fertigungsstraße für die Trägerplatten ein unteres rechteckförmiges Untergesenk (227) mit ebenem Boden und regelmäßigen Rändern (231) aufweist, die unter Bildung eines spitzwinkligen Profils nach innen einspringen, sowie ein oberes bewegliches Stößelgesenk (233), dessen Querschnitt komplementär zum Querschnitt des Untergesenks ist und das aus vier Teilen (235) besteht, die sich nach Beendigung des Arbeitsgangs des halben Schnitts unter Einwirkung der Schubkraft einer axialen Antriebsstange (237) spreizen deren Ende einen so ausgeformten Querschnitt aufweist, daß sie keilartig auf die Teile des Stößelgesenks einwirkt und diese seitlich gegen das Profil des Untergesenks in der Weise treibt, daß die sich dabei ergebende Ausformung des Randes (267) der Aufnahme schwalbenschwanzförmig ist, wobei das Untergesenk ebenfalls aus vier Teilen gebildet ist, welche seitlich auseinander spreizbar sind unter der Einwirkung der Schubkraft einer Antriebsstange (236), deren Ende eine Keilform aufweist, welche die vier Teile nach außen schieben kann.

15. Vorrichtung nach einem der Ansprüche 12 bis 14, dadurch gekennzeichnet, daß das Werkzeug zur automatischen Förderung (257) eine Entnahmeplatte (263) mit einer konkaven Wölbung auf der Unterseite (265) aufweist, welche mit einer Ansaugvorrichtung mit Düsen verbunden ist, wobei sie die Montage der Deckplatte (253) in aufgewölbter Form in der Aufnahme (223) in der Trägerplatte gestattet, und wobei diese Deckplatte gleich nach ihrer Freigabe wieder in ihre natürliche flache Form zurückkehrt, in der sie mit sehr geringem Spiel von den einspringenden Kanten (267) der Aufnahme im eingesetzten Zustand gehalten wird.

16. Kennzeichenschild, hergestellt unter Durchführung des Verfahrens und unter Einsatz der Vorrichtung nach den vorhergehenden Ansprüchen, welches in Doppelplattenform ausgeführt ist und eine dicke Trägerplatte (17, 103, 219) sowie eine feine Deckplatte (45, 105, 253) aufweist, wobei die Deckplatte in eine auf der Trägerplatte ausgebildete Aufnahme eingesetzt und in dieser Aufnahme mittels mindestens zweier seitlicher Abschnitte der Trägerplatte gehalten ist, welche über der feinen Platte nach innen gewendet sind.
